# EUROPÄISCHE PATENTSCHRIFT

(11) **EP 0 309 638 B1**
(45) Veröffentlichungstag und Bekanntmachung des Hinweises auf die Patenterteilung: **27.10.1993**
(21) Anmeldenummer: 88103531.5
(22) Anmeldetag: 07.03.1988
(51) Int. Cl.: B65G 39/18, B65G 13/11, B65G 1/08, B65G 39/09

(54) **Förderbahn mit Führungseinrichtung**
Transportation line including a guiding equipment
Chemin de transport comprenant un dispositif de guidage

(30) Priorität: 02.10.1987 DE 3733406
(43) Veröffentlichungstag der Anmeldung: 05.04.1989
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- EP-A- 0 162 484
- DE-U- 8 621 016
- US-A- 4 479 572

## Beschreibung

Die Erfindung betrifft eine Förderbahn mit einer Führungseinrichtung.

Solche Förderbahnen werden als Rollenförderbahnen oder Kugelförderbahnen beispielsweise im Luftfrachtverkehr eingesetzt. Ihre Führungseinrichtungen dienen dazu, einen Gegenstand, wie einen Frachtcontainer, beim Transport auf der Förderbahn seitlich zu führen, und außerdem dazu, den Frachtcontainer während des Flugbetriebs im Stillstand gegen Verlagerung seitlich und vertikal zu sichern.

Eine derartige Rollenförderbahn ist in der EP-A-300 128 beschrieben, die gemäß Art. 54 (3) EPÜ zum Stand der Technik gehört. Die Führungseinrichtung besteht dabei aus Führungselementen, die als einzelne, auf dem Kopf stehend L-förmige, hakenartige Gebilde ausgeführt und im Abstand zueinander verteilt an den Seitenrändern eines Paneels der Förderbahn befestigt sind. Der auf dieser Förderbahn geförderte Container besitzt an seinen unteren, in Förderrichtung längslaufenden Seitenrändern einen durchgehenden Führungssteg, der während des Fördervorgangs und beim Stillstand des Frachtcontainers von mehreren der Führungselemente lose von oben umgriffen wird. Der Frachtcontainer wird dadurch im Ruhezustand gegen eine Verlagerung seitlich und vertikal wirksam gesichert. Während des Fördervorgangs ergeben sich allerdings erhebliche Probleme, da schon ein leichtes Verkanten des Frachtcontainers bezüglich der Förderrichtung dazu führt, daß sich eine vordere Ecke des Containers an dem nächstfolgenden Führungselement verhakt und dadurch der Fördervorgang unterbrochen wird.

Die der Erfindung zugrundeliegende Aufgabe besteht somit darin, eine Förderbahn der eingangs genannten Art zu schaffen, die ein Verkanten und Verhaken des Frachtcontainers während des Transportvorgangs verhindert.

Erfindungsgemäß wird diese Aufgabe durch die im Anspruch 1 zusammengefaßten Merkmale gelöst.

Dieser erfindungsgemäßen Ausgestaltung liegt die Erkenntnis zugrunde, daß ein Verkanten und Verhaken des Frachtcontainers während des Transports nicht einfach dadurch zu unterbinden ist, daß man die Führungselemente als zumindest teilweise durchgehende Führungsleiste ausbildet, denn dadurch würde sich durch die flächige Anlage des Führungsstegs des Frachtcontainers an der zugeordneten Seitenwand der Führungsleiste eine übermäßig hohe Reibung ergeben, die zu einer Überlastung der Antriebselemente der Förderbahn führen würde.

Erfindungsgemäß ist daher zusätzlich vorgesehen, daß die zu erwartende hohe Reibung dadurch unterbunden wird, daß entlang dieser Führungsleiste im Paneel der Förderbahn Führungsrollen gelagert werden, auf denen der Frachtcontainer einerseits rollend getragen ist und andererseits seitlich im Abstand zu der Führungsleiste gehalten wird. Während des Fördervorgangs erfolgt also die seitliche Führung durch den Führungsbund der Führungsrollen.

Darüber hinaus ist jede Führungsrolle axial verschieblich gelagert und mittels einer Federanordnung im Abstand von der Führungsleiste weg vorgespannt . Auf diese Weise wird erreicht, daß zwar während des Fördervorgangs der Führungssteg des Containers im Abstand zur Führungsleiste geführt wird, daß jedoch im stationären Zustand beim Auftreten von seitlichen Stößen während des Flugbetriebs die Führungsrolle entgegen ihrer Federvorspannung so weit axial auf ihrer Achse verschoben werden kann, daß die vom Container ausgeübten seitlichen Kräfte von der stabilen Führungsleiste aufgenommen werden können und nicht unnötig auf die Lagerung der Führungsrolle einwirken.

Zwar ist aus der US-A-4,479,572 eine Förderbahn bekannt, bei der an den Seitenrändern der Förderfläche angeordnete Tragelemente als Führungsrollen ausgebildet sind, deren Drehachsen sich quer zur Förderrichtung erstrecken und die jeweils an ihrer nach außen gerichteten Stirnseite einen radial überstehenden Führungsbund besitzen, an dem die zu transportierenden Gegenstände anliegen.

Diese bekannte Anordnung weist aber keine neben diesen Führungsrollen angeordneten Leisten auf, die in bestimmten Betriebszuständen ebenfalls eine Führungsfunktion übernehmen könnten. Es wird weder ein Hinweis auf die der Erfindung zugrundeliegende Aufgabe noch darauf gegeben, zu ihrer Lösung unter anderem die Führungsrollen in axialer Richtung verschiebbar auszugestalten.

Besonders bevorzugt ist es, daß die Federanordnung als Tellerfederpaket ausgebildet ist, das sich einerseits an der Innenseite der zugeordneten Ausnehmung an der Führungsleiste abstützt und andererseits an einem stillstehenden Lagerelement der Führungsrolle.

Besonders bevorzugt ist weiterhin, daß die Führungsleisten an ihrem oberen, freien Ende einen in etwa horizontal nach innen vorspringenden Quersteg aufweisen, mit dem sie einen Führungssteg der zu fördernden Gegenstände von oben her übergreifen können. Dadurch wird im stationären Zustand bei Stößen während des Flugbetriebs durch die Führungsleisten eine Sicherung der auf der Förderbahn befindlichen Gegenstände auch gegen vertikale Verlagerungen gewährleistet.

Weiterhin ist bevorzugt, daß die Förderbahn ein sich in etwa parallel zur Förderfläche erstreckendes Paneel umfaßt, das Ausnehmungen aufweist, aus denen die oberen Scheitel der Tragelemente nach oben vorstehen. Dies ermöglicht es, bei einer besonders bevorzugten Ausführungsform die Führungsleisten einstückig mit dem Paneel aus einem Faserverbundwerkstoff zu fertigen. Auch die Führungsrolle kann bevorzugt aus einem Faserverbundwerkstoff bestehen.

Die Erfindung wird im folgenden beispielsweise unter Bezugnahme auf die Zeichnung näher erläutert; es zeigt:
- Fig. 1: eine Teileinheit einer erfindungsgemäßen Rollenförderbahn mit Führungseinrichtung wobei der zu fördernde Frachtcontainer in strichpunktierten Linien angedeutet ist; und
- Fig. 2: eine vergrößerte Teilschnittdarstellung entlang der Linie I-I in Fig 1.

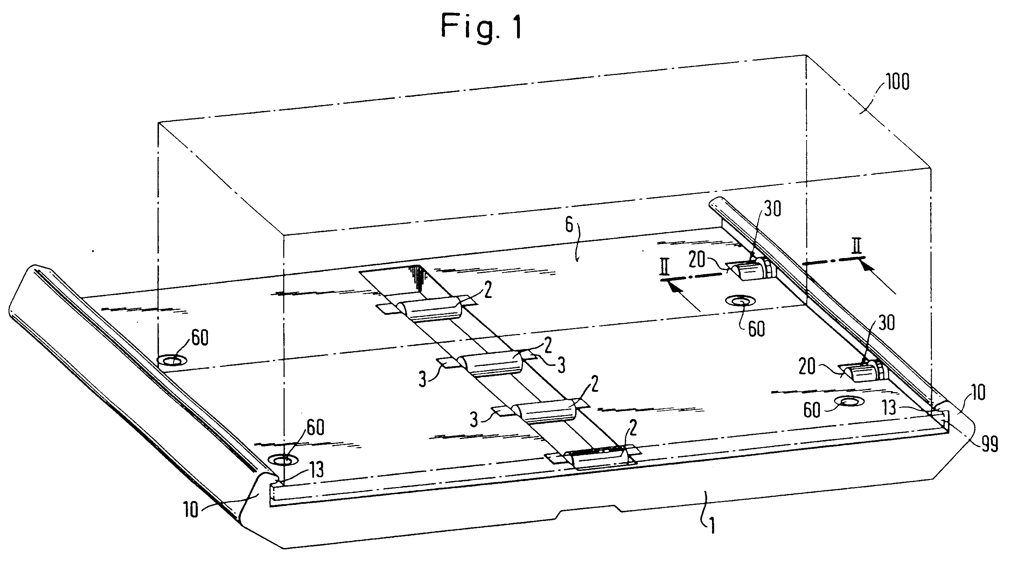

In der Fig. 1 ist eine Baueinheit einer Rollenförderbahn dargestellt, wie sie im einzelnen in der gemäß Art. 54 (3) EPÜ zum Stand der Technik gehörenden EP-A-0 300 128 beschrieben ist. Diese Rollenförderbahn umfaßt ein aus Verbundwerkstoff gefertigtes Paneel 1 mit einer im wesentlichen ebenen Oberfläche 6. In einer in Förderrichtung längslaufenden Vertiefung dieses Paneels 1 sind in Förderrichtung im Abstand zueinander mehrere Rollen 2 mittels einer Schnapphalterungen 3 drehbar gelagert. Die einzelnen Rollen 2 können entweder als Antriebsrolle gemäß der nach Art. 54 (3) EPÜ zum Stand der Technik gehörenden EP-A-0 300 127 oder als freilaufende Tragrollen gemäß der nach Art. 54(3) EPÜ zum Stand der Technik gehörenden EP-A-0 300 129 ausgebildet sein. Ferner sind in dem Paneel 1 seitlich der Reihe der Rollen 2 mehrere Befestigungselemente 60 angebracht, die zur Befestigung der Rollenförderbahn am Frachtraumboden eines Flugzeugs dienen.

An den in Förderrichtung längslaufenden Seitenrändern des Paneels 1 ist jeweils eine Führungseinrichtung angeordnet, die jeweils aus einer einstückig mit dem Paneel 1 geformten Führungsleiste 10 und mehreren Führungsrollen 30 besteht, welche benachbart zur Führungsleiste 10 in Ausnehmungen 20 im Paneel 1 frei drehbar gelagert sind.

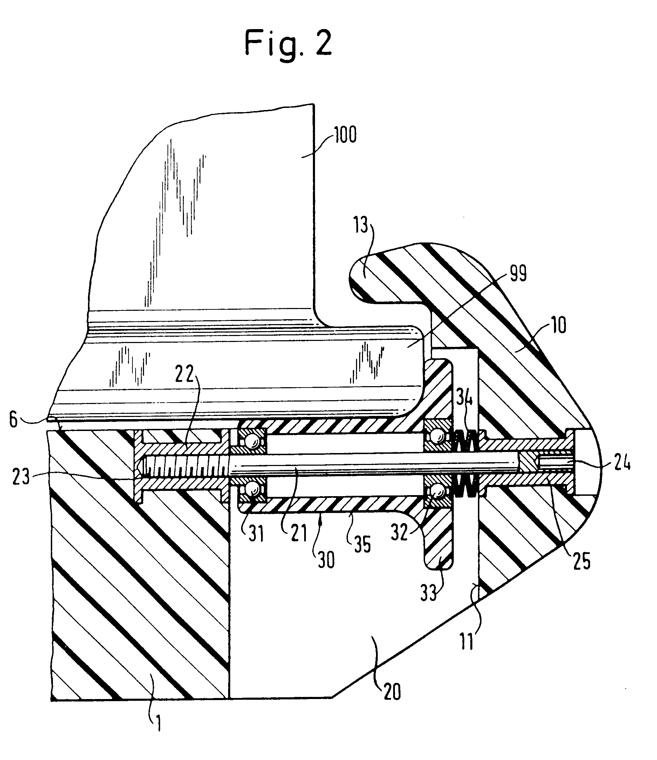

Wie in den Fig. 1 und 2 zu sehen ist, besitzt die Führungsleiste 10 einen von der Oberfläche 6 des Paneels 1 nach oben ragenden, in etwa einem auf dem Kopf stehenden L entsprechenden Querschnitt mit einem im Abstand zur Oberfläche 6 des Paneels 1 etwa horizontal verlaufenden Quersteg 13. Diese Querschnittsform der Führungsleiste 10 ist derart ausgebildet, daß sie einen am unteren Längsseitenrand eines auf der Förderbahn befindlichen Frachtcontainers 100 angeformten Führungssteg 99 lose und im Abstand übergreift, wie dies insbesondere in der Fig. 2 dargestellt ist.

Wie ebenfalls am besten in der Fig. 2 zu sehen ist, besitzt jede Führungsrolle 30 einen in etwa hohlzylindrischen Körper aus vorzugsweise Faserverbundmaterial, der am dem der Führungsleiste 10 zugewandten axialen Ende einen Führungsbund 33 größeren Durchmessers trägt. An den beiden axialen Stirnseiten der Führungsrolle 30 ist jeweils im Inneren des hohlzylindrischen Körpers ein Wälzlager 31 bzw. 32 angeordnet, wobei der äußere Laufring dieser beiden Wälzlager 31, 32 drehfest mit dem Körper der Führungsrolle 30 verbunden ist. Mittels dieser beiden Wälzlager 31 und 32 ist die Führungsrolle 30 in der Ausnehmung 20 des Paneels 1 derart auf einer Achse 21 gelagert, daß ihre Umfangsfläche 35, auf der der Boden des Frachtcontainers 100 aufliegt, geringfügig über die Oberfläche 6 des Paneels 1 hinausragt. Der seitliche Rand des Führungsstegs 99 eines Frachtcontainers 100 liegt dabei an der radialen Schulter des Führungsbundes 33 der Führungsrolle 30 an und wird von dieser im Abstand zur vertikalen Seitenfläche 11 der Ausnehmung 20 des Paneels 1 und im Abstand zur benachbarten Seitenfläche der Führungsleiste 10 gehalten, wie in der Fig. 2 zu sehen ist.

Die Achse 21 der Führungsrolle 30 ist an ihrem linken Ende mit einem Außengewinde 23 versehen und mit diesem Gewinde 23 in ein Innengewinde einer Gewindebuchse 22 eingeschraubt, die fest im Material des Paneels 1 verankert ist. Das in der Fig. 2 rechte Ende der Achse 21 ist im Gleitsitz in einer Lagerbuchse 25 gehaltert, die ebenfalls fest in das Material des Paneels 1 eingebettet ist. Sowohl die Gewindebuchse 22 als auch die Lagerbuchse 25 bestehen aus Metall. Zum Einschrauben der Achse 21 in die Gewindebuchse 22 ist das in der Fig. 2 rechte Ende der Achse 21 mit einem Innensechskant 24 versehen, der über eine entsprechend angeordnete Öffnung in der rechten Seitenkante des Paneels 1 zugänglich ist.

Die Führungsrolle 30 ist mit den beiden inneren Laufringen ihrer beiden Wälzlager 31 und 32 im Schiebesitz axial verschiebbar auf der Achse 21 gehaltert. Wie in der Fig. 2 zu sehen ist, ist die axiale Länge der Führungsrolle 30 geringer als die Breite der Ausnehmung 20 im Paneel 1. Zwischen der in der Zeichnung rechten Stirnfläche der Führungsrolle 30 und der benachbarten vertikalen Seitenfläche 11 der Ausnehmung 20 ist auf der Achse 21 ein Tellerfederpaket 34 angeordnet, das sich einerseits an der Lagerbuchse 25 und andererseits am inneren Laufring des Wälzlagers 32 abstützt und die Führungsrolle 30 im Ruhezustand zur Anlage an die Gewindebuchse 22 vorspannt, also im Abstand zur vertikalen Seitenfläche 11 hält. Dadurch wird gewährleistet, daß der am Frachtcontainer 100 angebrachte Führungssteg 99 durch den Führungsbund 33 während der Förderbewegung des Frachtcontainers im Abstand zur Führungsleiste 10 gehalten wird, so daß eine Reibung zwischen diesen Teilen vermieden wird. Falls im Betrieb, insbesondere während des Flugbetriebs auf den Frachtcontainer 100 jedoch starke Kräfte ausgeübt werden, die auch auf die Führungsrolle 30 übertragen werden, so wird diese Führungsrolle 30 entgegen der Kraft des Tellerfederpakets 34 verschoben, wodurch der Führungssteg 99 zur Anlage an die Führungsleiste 10 gelangt, die somit die wesentlichsten Kräfte aufnimmt und den Frachtcontainer 100 gegen eine Verlagerung in seitlicher Richtung sichert. Auch eine Verlagerung in vertikaler Richtung wird durch den Quersteg 13 der Führungsleiste unterbunden.

## Patentansprüche

1. Förderbahn mit einer Führungseinrichtung, die folgende Bestandteile umfaßt:
- Führungsleisten (10), die sich in Förderrichtung zumindest über einen Teil der Länge der Seitenränder einer Förderfläche erstrecken, die von den oberen Scheiteln der Mantelflächen einer Vielzahl von Tragelementen (2) definiert ist, die jeweils um wenigstens eine in etwa horizontale Achse drehbar gelagert sind und auf denen die zu transportierenden Gegenstände (100) aufliegen, sowie
- Führungsrollen (30) mit folgenden Eigenschaften:
- sie sind als Tragelemente ausgebildet und unmittelbar neben den Führungsleisten (30) angeordnet; ihre Drehachsen (21) erstrecken sich quer zur Förderrichtung,
- sie besitzen an ihrer der benachbarten Führungsleiste (10) zugewandten Stirnseite einen radial überstehenden Führungsbund (33), und
- sie sind gegen die Kraft einer Federanordnung (34) in axialer Richtung aus einer Förderstellung zur benachbarten Führungsleiste (10) hin verschiebbar, wobei ihr jeweiliger Führungsbund (33) in der Förderstellung so vor der benachbarten Führungsleiste (10) liegt, daß er die zu fördernden Gegenstände (100) von der Führungsleiste (10) im Abstand hält, und wobei der jeweilige Führungsbund (33) in der zur Führungsleiste (10) hin vorgeschobenen Stellung so in einer Vertiefung in der Führungsleiste (10) versenkt ist, daß die zu transportierenden Gegenstände statt am Führungsbund (33) an der Führungsleiste (10) zur Anlage kommen.

2. Förderbahn nach Anspruch 1, dadurch **gekennzeichnet,** daß die Federanordnung (34) ein Tellerfederpaket ist.

3. Förderbahn nach Anspruch 1 oder 2, dadurch **gekennzeichnet,** daß die Führungsleisten (10) an ihrem oberen freien Ende einen in etwa horizontal nach innen vorspringenden Quersteg (13) aufweisen, mit dem sie einen Führungssteg (39) der zu fördernden Gegenstände (100) von oben her übergreifen können.

4. Förderbahn nach einem der vorhergehenden Ansprüche, dadurch **gekennzeichnet,** daß sie ein sich in etwa parallel zur Förderfläche erstreckendes Paneel (1) umfaßt, das Ausnehmungen aufweist, aus denen die oberen Scheitel der Tragelemente (2, 30) nach oben vorstehen.

5. Förderbahn nach Anspruch 4, dadurch **gekennzeichnet,** daß die Führungsleisten (10) einstückig mit dem Paneel (1) aus einem Faserverbundwerkstoff geformt sind.

6. Förderbahn nach einem der vorhergehenden Ansprüche, dadurch **gekennzeichnet,** daß die Führungsrollen (30) aus einem Faserverbundwerkstoff geformt sind.

## Claims

1. A conveyor track including guide means comprising the following components:
- guide bars (10) which extend in conveying direction at least along part of the length of the lateral edges of a transport area which is defined by the top vertexes of the surface areas of a multiplicity of supporting members (2) each of which is mounted for rotation about at least one approximately horizontal axis and on which the goods (100) to be conveyed are placed, and
- guide rollers (30) exhibiting the following properties:
- they are configured as supporting members and disposed immediately adjacent the guide bars (10); their axes of rotation (21) extend across the conveying direction,
- the end thereof which faces the adjoining guide bar (10) is provided with a radially projecting guide collar (33), and
- they are adapted to be moved against the action of a spring assembly (34) in axial direction from a conveying position towards the adjacent guide bar (10), the respective guide collar (33) in the conveying position being disposed in front of the adjacent guide bar (10) so as to keep the goods (100) to be conveyed at a distance from the guide bar (10), and the respective guide collar (33) in its position where it has been moved towards the guide bar (10) being sunk in a recess formed in the guide bar (10) so that the goods to be conveyed will abut the guide bar (10) instead of the guide collar (33).

2. The conveyor track claimed in claim 1, characterized in that the spring assembly (34) is a Belleville spring assembly.

3. The conveyor track claimed in claim 1 or claim 2, characterized in that the free top ends of the guide bars (10) include an approximately horizontally inwardly protruding transverse web (13) by means of which they are able to engage from above about a guide web (39) of the goods (100) to be conveyed.

4. The conveyor track claimed in any one of the preceding claims, characterized in that the conveyor track comprises a panel (1) which extends approximately parallel to the transport area and which has recesses from which the top vertexes of the supporting members (2, 30) protrude upwardly.

5. The conveyor track claimed in claim 4, characterized in that the guide bars (10) are formed integrally with the panel (1) from a fibre-reinforced composite material.

6. The conveyor track claimed in any one of the preceding claims, characterized in that the guide rollers (30) are made from a fibre-reinforced composite material.

## Revendications

1. Transporteur avec un dispositif de guidage, comportant les composants suivants:
- des barres de guidage (10), qui s'étendent dans le sens de transport sur une partie du moins de la longueur des bords latéraux d'une surface de transport, définie par les sommets supérieurs des surfaces d'enveloppe d'une multiplicité d'éléments porteurs (2), qui sont respectivement montés, avec une possibilité de rotation, autour d'un axe au moins à peu près horizontal, et sur lesquels s'appliquent les objets à transporter (100), ainsi que
- des rouleaux de guidage (30) avec les propriétés suivantes:
- ils sont réalisés sous forme d'éléments porteurs et disposés directement à côté des barres de guidage (10); leurs axes de rotation (21) s'étendent à la transversale du sens de transport,
- ils présentent un collet de guidage (33) en saillie radiale, sur leur face frontale tournée vers la barre de guidage adjacente (10),
- ils peuvent se déplacer dans le sens axial, contre la force d'un agencement de ressorts (34), à partir d'une position de transport en direction de la barre de guidage adjacente (10), leur collet de guidage (33) respectif se situant, dans la position de transport, devant la barre de guidage (10) adjacente, de sorte qu'il maintient les objets à transporter (100) à distance de la barre de guidage (10), et le collet de guidage respectif (33) étant abaissé, dans la position d'avance en direction de la barre de guidage (10), dans une cavité pratiquée dans la barre de guidage (10), de sorte que les objets à transporter entrent au contact de la barre (10), au lieu du collet de guidage (33).

2. Transporteur suivant la revendication 1, caractérisé en ce que l'agencement de ressorts (34) est un bloc de ressorts à disques.

3. Transporteur suivant l'une des revendications 1 et 2, caractérisé en ce que les barres de guidage (10) présentent, sur leur extrémité libre supérieure, une traverse (13) en saillie à peu près horizontale vers l'intérieur, par laquelle elles peuvent recouvrir, à partir du haut, un profil de guidage (99) des objets (100) à transporter.

4. Transporteur suivant l'une quelconque des revendications précédentes, caractérisé en ce qu'il comporte une table (1), qui s'étend à peu près à la parallèle de la surface de transport et présente des évidements, dont dépassent vers le haut les sommets supérieurs des éléments porteurs (2, 30).

5. Transporteur suivant la revendication 4, caractérisé en ce que les barres de guidage (10) sont formées d'une seule pièce avec la table (1), à partir d'un matériau composite renforcé par des fibres.

6. Transporteur suivant l'une quelconque des revendications précédentes, caractérisé en ce que les rouleaux de guidage (30) sont formés à partir d'un matériau composite renforcé par des fibres.
